# FASCICULE DE BREVET EUROPEEN

(11) **EP 4 241 138 B1**
(45) Date de publication et mention de la délivrance du brevet: **05.06.2024**
(21) Numéro de dépôt: 21805505.1
(22) Date de dépôt: 04.11.2021
(51) Int. Cl.: G04G 17/04, A44C 5/00, A44C 5/14, G04G 17/06, G06F 1/16

(54) **MONTRE À AFFICHEUR GLISSANT**
ARMBANDUHR MIT SCHIEBEDISPLAY
WRISTWATCH WITH A SLIDING DISPLAY

(30) Priorité: 05.11.2020 EP 20205990
(43) Date de publication de la demande: 13.09.2023
(73) Titulaire: The Swatch Group Research and Development Ltd, 2074 Marin (CH)
(72) Inventeur: TORTORA, Pierpasquale, 2000 Neuchâtel (CH)
(74) Mandataire: ICB SA
(86) Numéro de dépôt international: PCT/EP2021/080591
(87) Numéro de publication internationale: WO 2022/096550

(56) Documents cités:
- WO-A1-2005/083546
- WO-A1-2015/100275
- WO-A1-2016/124599
- WO-A1-2017/156633
- WO-A2-2014/130946
- CN-A- 108 835 778
- CN-A- 110 037 399
- CN-Y- 2 481 179
- US-A1- 2013 074 543
- US-A1- 2013 173 658

## Description

### Domaine technique

La présente invention concerne le domaine des montres à afficheur glissant et plus particulièrement celui des écrans intelligents et des bracelets intelligents.

### Arrière-plan technologique

Les montres sont généralement constituées d'une boite comprenant une carrure un fond et une glace délimitant un logement dans laquelle est disposé un mouvement qui peut être mécanique ou électronique destiné à afficher l'heure courante au moyen d'organes d'affichage analogique ou numérique. Un bracelet est relié à la carrure afin de pouvoir attacher la montre au poignet au moyen d'un fermoir. Selon la morphologie du porteur, ces carrures peuvent gêner la lecture pour l'utilisateur, lors du porter, car la montre se trouve généralement entre le radius et l'ulna.

Dans cette position, l'utilisateur ne voit pas l'affichage doit tourner son avant-bras afin de voir l'affichage. Cette torsion peut se révéler particulièrement douloureuse lorsque l'utilisateur a une douleur à l'épaule ou au coude par exemple.

Malheureusement, soit en raison du fermoir, soit en raison de la dimension de la montre, cette dernière ne peut se trouver que sur la partie supérieure ou inférieure du bras avant, et il est donc impossible de déplacer la montre dans une position intermédiaire sur le bracelet afin de faciliter la lecture de ses moyens d'affichage.

Le document CN110037399A décrit une montre comportant essentiellement deux parties: un écran intelligent et un bracelet intelligent. Chacune de ces deux parties comprend au moins un processeur et des interfaces de communication (récepteurs/transmetteurs) permettant à ces deux parties de communiquer et transférer des données de l'une à l'autre. L'écran est arrangé pour glisser sur une partie centrale rigide du bracelet, des contacts électriques étant prévus sur le côté de cette partie rigide, pour assurer la connexion électrique entre les deux parties.

### Résumé de l'invention

La présente invention se propose de résoudre tout ou partie des inconvénients grâce à la combinaison des caractéristiques de la revendication indépendante 1 annexée.

Des formes de réalisation préférées sont définies dans les revendications dépendantes 2 à 5.

L'invention concerne également un procédé de communication tel que défini dans la revendication indépendante 6 annexée.

### Brève description des figures

L'invention sera décrite ci-après de manière plus détaillée à l'aide des dessins annexés, donnés à titre d'exemples nullement limitatifs, dans lesquels :
- La figure 1 illustre une montre comprenant au moins un bracelet intelligent **200** selon un mode de réalisation de l'invention, et au moins un écran intelligent **100** selon un mode de réalisation de l'invention ;
- La figure 2 représente ledit bracelet intelligent **200** coopérant avec ledit au moins un écran intelligent **100** lorsque ledit au moins un écran intelligent **100** se déplace le long dudit au moins un bracelet intelligent **200** et tout en fournissant lesdites données traitées **101** ; et,
- La figure 3 montre un procédé de communication **500** selon un mode de réalisation de l'invention.

### Description détaillée de l'invention

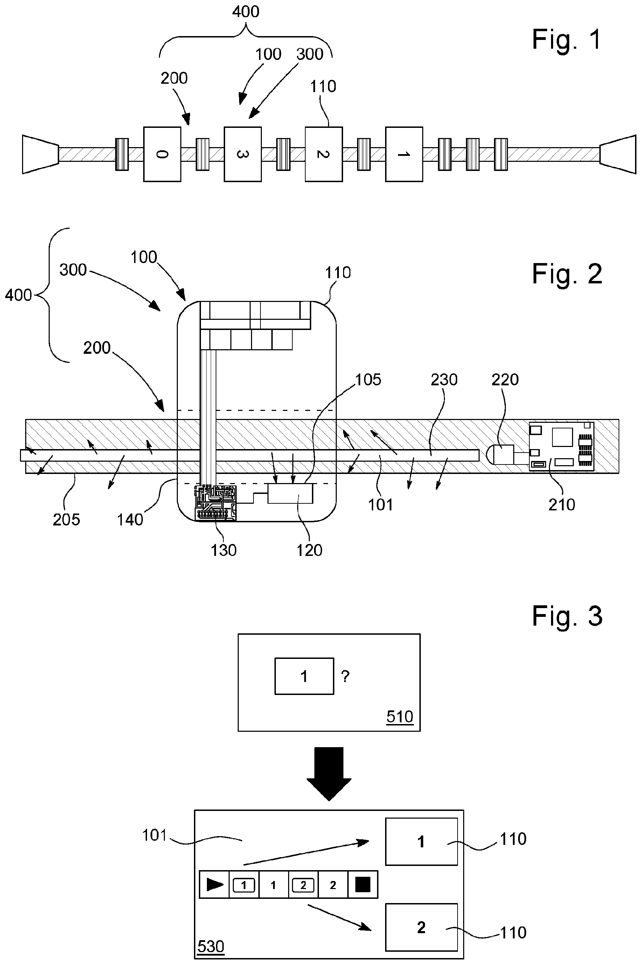

Comme le montre la figure 1, la présente invention peut se présenter sous la forme d'une montre **400** ou d'une montre en kit **400,** d'un bijou **400** et/ou d'un bijou en kit **400** comprenant au moins un bracelet intelligent **200,** au moins un écran intelligent **100,** et/ou pierre précieuse ou de synthèse et/ou pièce de joaillerie **300.** Le reste de la description détaillée de l'invention sera essentiellement basé sur ladite montre **400** ou ladite montre en kit **400** et ledit au moins un écran intelligent **100** pour des raisons de lisibilité. Il en va de même pour le nombre d'élément composant ladite montre **400** ou ladite montre en kit **400.** En d'autres termes, le fait d'écrire « l'écran intelligent **100** » ne saurait limiter le nombre d'écran intelligent **100** à uniquement un d'écran intelligent **100** et peut selon les modes de réalisation comprendre un ou plusieurs écrans intelligents **100.** Par ailleurs, l'homme du métier comprend que cette description s'applique mutatis mutandis à une montre bijou **400,** à une montre bijou en kit **400,** audit bijou **400** ou audit bijou en kit **400** comprenant au moins un bracelet intelligent **200** et au moins une pierre précieuse ou de synthèse et/ou pièce de joaillerie **300** selon un mode de réalisation de l'invention présentée ci-après.

L'écran intelligent **100** peut être disposé sur le bracelet intelligent **200** et l'utilisateur peut déplacer l'écran intelligent **100** le long du bracelet intelligent **200** afin d'agencer l'écran intelligent **100** sur le bracelet intelligent **200** dans une position confortable.

Par ailleurs, il est totalement envisageable, par exemple, de disposer des objets décoratifs avant et/ou après ledit au moins un écran intelligent **100** le long du bracelet **200** comme cela est exposé sur la figure 1.

Comme mentionné, l'écran intelligent **100** peut coopérer avec le bracelet intelligent **200.** Cette coopération est schématisée sur la figure 2 et montre **400** une vue en coupe de l'écran intelligent **100.**

Comme cela est visible sur la figure 2, le bracelet intelligent **200** comprend un bracelet **202,** une unité de traitement **210** configurée pour traiter des données et pour fournir des données traitées **101** et un transmetteur **220** configuré pour transmettre lesdites données traitées **101.** Dans l'exemple illustré le transmetteur **220** est un transmetteur optique **220.** Alternativement et comme mentionné ci-avant, le transmetteur **220** peut aussi se présenter sous la forme d'un transmetteur radiofréquence **220,** d'un transmetteur à ultrasons **220,** d'un transmetteur inductif **220,** d'un transmetteur électrique **220** Les données traitées **101** peuvent être transmises jusqu'à l'écran intelligent **100** par ondes électromagnétiques, acoustiques, par signaux électriques et/ou par signaux optiques.

Pour permettre cette transmission, le bracelet **202** comprend une deuxième interface de communication **205** et au moins un support de transmission ou guide pour la transmission **230,** pouvant être intégré ou dissimulé dans le bracelet **202,** éventuellement en matériau synthétique et/ou naturel. Cette intégration de la deuxième interface de communication **205** et dudit au moins un support de transmission ou guide pour la transmission **230** permet de faciliter la coopération avec ledit au moins un écran intelligent **100,** et pour guider lesdites données traitées **101** le long dudit au moins un bracelet **202** au moins jusqu'audit au moins un écran intelligent **100** via ladite au moins une deuxième interface de communication **205,** de préférence jusqu'au moins une première interface de communication **105.**

Selon les modes de réalisation, la deuxième interface de communication **205** se présente sous la forme d'une interface transparente / translucide par exemple une fibre optique **230** qui assure la transmission des données traitées jusqu'à l'écran intelligent via la première interface de communication **105.**

Selon des variantes, cette deuxième interface peut se présenter sous forme d'un guide d'onde **230** électromagnétique, d'un guide d'onde acoustique **230,** d'un conducteur électrique **230** qui peuvent transmettre et guider les données traitées **101** à l'écran intelligent **100** respectivement par ondes électromagnétiques, acoustiques, par signaux électriques, via la première interface de communication **105.**

Cette dernière, c'est-à-dire la première interface de communication **105** est intégré dans l'écran intelligent **100** et peut coopérer avec la deuxième interface de communication **205** pour transférer les données traitées **101** au récepteur **120** par exemple. Ainsi, les données traitées **101** peuvent être transférées entre l'écran intelligent **100** et le bracelet intelligent **200** les données traitées **101** étant transférées entre la première interface de communication **105** et la deuxième interface de communication **205.**

En effet, le support de transmission **230** peut guider les données traitées **101** le long du bracelet **202** jusqu'à l'écran intelligent **100.** Plus particulièrement, les données traitées **101** sont transférées de la deuxième interface de communication **205** audit au moins un écran intelligent **100** via au moins une première interface de communication **105.** En effet, la deuxième interface de communication **205** peut être en contact avec la première interface de communication **105** et/ou avec l'écran intelligent **100,** comme cela est représenté sur la figue 2, de sorte que les données traitées **101** puissent être transférées entre a deuxième interface de communication **205** et la première interface de communication **105.**

L'écran intelligent **100,** quant à lui, comprend un afficheur **110,** un récepteur **120** configuré pour recevoir des données traitées **101** et une unité de commande **130** configurée pour commander l'afficheur **110** en fonction des données traitées **101.** Comme mentionné en amont, la présente invention peut se présenter sous la forme d'une pierre précieuse ou de synthèse et/ou pièce de joaillerie **300** comprenant l'écran intelligent **100.** Ainsi, à la différence de l'écran intelligent **100,** la pierre précieuse ou de synthèse et/ou pièce de joaillerie **300** permet grâce à l'agencement proposé d'afficher ponctuellement une information liée aux données traitées **101,** et lorsqu'aucune information n'est affichée, la pierre précieuse ou de synthèse et/ou pièce de joaillerie **300** donne l'apparence d'une montre bijou **400** élégante ou d'un bijou **400** élégant au poignet, avec des éléments de décoration **299.**

Le récepteur **120** comprend un récepteur radiofréquence **120** de sorte que ledit au moins un récepteur **120** reçoit lesdites données traitées **101** par signaux radiofréquences. Alternativement, le récepteur 120 peut prendre la forme, d'un récepteur à ultrasons **120,** d'un récepteur inductif **120,** d'un récepteur électrique **120** et/ou au moins d'un récepteur optique **120,** de sorte que ledit au moins un récepteur **120** reçoit lesdites données traitées **101,** soit par signaux ultrasoniques, soit par signaux inductifs, soit par signaux de courant, soit par signaux tension et/ou soit par signaux lumineux.

Une fois inséré sur le bracelet intelligent **200,** l'écran intelligent **100** peut coulisser le long du bracelet intelligent **200** par l'intermédiaire d'un organe de coulissement **140** que comprend le bracelet intelligent **200.** Cet organe de coulissement **140** peut prendre par exemple la forme d'un palier permettant le coulissement dudit au moins un écran intelligent **100** le long dudit au moins un bracelet intelligent **200.**

Comme susmentionné, il est possible de prévoir un ensemble d'écrans intelligents **100** comprenant chacun un écran intelligent **100** sur le bracelet intelligent **200** ou sur un ensemble de bracelets intelligents **200** du type celui décrit ci-dessus. À cet effet, il est aussi prévu un procédé de communication **500** qui permet au bracelet intelligent **200** de communiquer avec l'écran intelligent **100.**

Pour ce faire, le procédé de communication **500** comprend au moins une étape d'indication **510** du nombre de bracelets intelligents **200** dans ledit ensemble de bracelet intelligents **200** et/ou d'écran intelligent **100.**

Une fois le nombre indiqué, le procédé comprend au moins une étape de répartition **530** des données à traiter et/ou des données traitées **101** entre le bracelet intelligent **200** et/ou l'écran intelligent **100,** de sorte qu'une montre bracelet **202,** c'est-à-dire l'écran intelligent **100** avec le bracelet intelligent **200** puisse répartir lesdites données à traiter entre les bracelets intelligents **200** et/ou les données traitées **101** entre les écrans intelligents **100.** Les données traitées **101** peuvent se présenter sous un groupement **600** de données traitées, qui est transféré entre le ou lesdits bracelets intelligents **200** et/ou entre le ou les écrans intelligents **100.** Le groupement **600** de données traitées comprend au moins une adresse **121** et au moins une donnée traitée de sorte à faciliter la communication entre le ou les bracelets intelligents **200** avec le ou les au moins écrans intelligents **100.**

Ainsi ledit groupement **600** de données traitées et/ou lesdites données traitées **101** est distribué à l'écran intelligent **100** ou à l'ensemble d'écrans intelligent s**100,** l'ensemble d'écrans intelligents pouvant se déplacer sur l'ensemble de bracelets intelligents **200** ou sur un bracelet intelligent **200.** Dès lors, le groupement **600** de données traitées est centralisé et/ou les données traitées **101** sont centralisées et il est réparti ou elles sont réparties sur l'ensemble d'écrans intelligents **100.**

Un algorithme de multiplexage ou ledit procédé de communication **500** est prévu pour faire que les données traitées **101** soient adressées à au moins un écran intelligent **100.** Pour cela, ledit groupement **600** de données traitées peut par exemple être structuré en trois parties. Une première partie active au moins un écran intelligent **100** de l'ensemble d'écrans intelligents **100,** une deuxième partie comprend une donnée relative à l'heure par exemple et la troisième partie indique la fin dudit groupement **600** de données et met en veille ledit ensemble au moins un écran intelligent **100.**

L'unité de traitement **210,** permettant de calculer l'heure et/ou la date, est intégrée dans le bracelet **202.**

## Revendications

1. Montre (400) ou pièce de joaillerie (300), en particulier montre ou bijou en kit, comprenant un bracelet intelligent (200) et au moins un écran intelligent (100) compris, le cas échéant, dans une pierre précieuse ou de synthèse, et configuré pour être déplacé et disposé en un endroit donné le long du bracelet intelligent (200), le bracelet intelligent (200) comprenant :
- un bracelet (202) ;
- une unité de traitement (210) configurée pour traiter des données (201) et pour fournir des données traitées (101) ;
- un transmetteur (220) configuré pour transmettre, via une deuxième interface de communication (205) et au moins un support ou guide pour la transmission (230), les données traitées (101) à une première interface de communication (105) comprenant un récepteur (120) dudit écran intelligent (100), ce récepteur (120) étant configuré pour recevoir les données traitées (101), le support de transmission (230) étant agencé pour assurer en continu la transmission des données traitées (101) par ondes électromagnétiques ou acoustiques ou par signaux électriques jusqu'au récepteur (120) de l'écran intelligent (100) disposé en un endroit donné le long du bracelet (202) ;
l'écran intelligent (100) comprenant :
- un afficheur (110) configuré pour coulisser et/ou glisser le long dudit bracelet intelligent (200) ;
- une unité de commande (130) configurée pour commander l'afficheur (110) en fonction des données traitées (101).

2. Montre (400) ou pièce de joaillerie (300) selon la revendication 1, dans laquelle ladite au moins une deuxième interface de communication (205) est configurée pour être en contact avec au moins ladite première interface de communication (105).

3. Montre (400) ou pièce de joaillerie (300) selon l'une quelconque des revendications précédentes, dans laquelle ledit au moins un support de transmission (230) comprend au moins un guide d'onde (230) électromagnétique, au moins un guide d'onde acoustique (230), au moins un conducteur électrique (230) et/ou au moins une fibre optique (230).

4. Montre (400) ou pièce de joaillerie (300) selon l'une quelconque des revendications précédentes, dans laquelle ledit au moins un transmetteur (220) comprend au moins un transmetteur radiofréquence (220), au moins un transmetteur à ultrasons (220), au moins un transmetteur inductif (220), au moins un transmetteur électrique (220) et/ou au moins un transmetteur optique (220).

5. Montre (400) ou pièce de joaillerie (300) selon l'une quelconque des revendications précédentes, dans laquelle ledit au moins un récepteur (120) comprend au moins un récepteur radiofréquence (120), au moins un récepteur à ultrasons (120), au moins un récepteur inductif (120), au moins un récepteur électrique (120) et/ou au moins un récepteur optique (120).

6. Procédé de communication (500) pour une montre (400) et/ou pièce de joaillerie (300) selon l'une des revendications 1 à 5 comprenant au moins :
- se munir d'une montre (400) ou d'une pièce de joaillerie (300) selon l'une des revendications 1 à 5 ;
- fournir une indication (510) du nombre de dit au moins un bracelet intelligent (200) dudit ensemble d'au moins un bracelet intelligent (200), de dit au moins un écran intelligent (100) dudit ensemble d'au moins un écran intelligent (100), et/ou de dit au moins une pierre précieuse ou de synthèse et/ou pièce de joaillerie (300) dudit ensemble d'au moins une pierre précieuse ou de synthèse et/ou pièce de joaillerie (300) ; et,
- effectuer une répartition (530) desdites données (201) à traiter et/ou desdites données traitées (101) entre ledit ensemble d'au moins un bracelet intelligent (200), ledit ensemble d'au moins un écran intelligent (100) et/ou ledit ensemble d'au moins une pierre précieuse ou de synthèse et/ou pièce de joaillerie (300).

## Patentansprüche

1. Uhr (400) oder Schmuckstück (300), insbesondere Uhr oder Schmuckstück als Bausatz, mit einem intelligenten Armband (200) und mindestens einem intelligenten Bildschirm (100), der gegebenenfalls in einem Edelstein oder synthetischen Stein enthalten ist und so konfiguriert ist, dass er bewegt und an einer bestimmten Stelle entlang des intelligenten Armbands (200) angeordnet werden kann, wobei das intelligente Armband (200) Folgendes umfasst:
- ein Armband (202);
- eine Verarbeitungseinheit (210), die zum Verarbeiten von Daten (201) und zum Bereitstellen der verarbeiteten Daten (101) konfiguriert ist;
- einen Sender (220), der so konfiguriert ist, dass er über eine zweite Kommunikationsschnittstelle (205) und mindestens ein Übertragungsmedium oder eine Übertragungsführung (230) die verarbeiteten Daten (101) an eine erste Kommunikationsschnittstelle (105) sendet, die einen Empfänger (120) des intelligenten Bildschirms (100) umfasst, wobei der Empfänger (120) so konfiguriert ist, dass er die verarbeiteten Daten (101) empfängt, wobei das Übertragungsmedium (230) so beschaffen ist, dass es kontinuierlich die Übertragung der verarbeiteten Daten (101) durch elektromagnetische oder akustische Wellen oder durch elektrische Signale bis zum Empfänger (120) des intelligenten Bildschirms (100), der an einer bestimmten Stelle entlang des Armbands (202) angeordnet ist, sicherstellt;
wobei der intelligente Bildschirm (100) Folgendes umfasst:
- eine Anzeige (110), die so konfiguriert ist, dass sie entlang des intelligenten Armbands (200) gleitet und/oder verschiebbar ist;
- eine Steuereinheit (130), die so konfiguriert ist, dass sie die Anzeige (110) in Abhängigkeit von den verarbeiteten Daten (101) steuert.

2. Uhr (400) oder Schmuckstück (300) nach Anspruch 1, wobei die mindestens eine zweite Kommunikationsschnittstelle (205) so konfiguriert ist, dass sie mit mindestens der ersten Kommunikationsschnittstelle (105) in Kontakt steht.

3. Uhr (400) oder Schmuckstück (300) nach einem der vorhergehenden Ansprüche, wobei das mindestens eine Übertragungsmedium (230) mindestens einen elektromagnetischen Wellenleiter (230), mindestens einen akustischen Wellenleiter (230), mindestens einen elektrischen Leiter (230) und/oder mindestens eine optische Faser (230) umfasst.

4. Uhr (400) oder Schmuckstück (300) nach einem der vorhergehenden Ansprüche, wobei der mindestens eine Sender (220) mindestens einen Hochfrequenzsender (220), mindestens einen Ultraschallsender (220), mindestens einen induktiven Sender (220), mindestens einen elektrischen Sender (220) und/oder mindestens einen optischen Sender (220) umfasst.

5. Uhr (400) oder Schmuckstück (300) nach einem der vorhergehenden Ansprüche, wobei der mindestens eine Empfänger (120) mindestens einen Hochfrequenzempfänger (120), mindestens einen Ultraschallempfänger (120), mindestens einen induktiven Empfänger (120), mindestens einen elektrischen Empfänger (120) und/oder mindestens einen optischen Empfänger (120) umfasst.

6. Kommunikationsverfahren (500) für eine Uhr (400) und/oder ein Schmuckstück (300) nach einem der Ansprüche 1 bis 5, das mindestens Folgendes umfasst:
- Ausstatten mit einer Uhr (400) oder einem Schmuckstück (300) nach einem der Ansprüche 1 bis 5;
- Bereitstellen einer Anzeige (510) der Anzahl von mindestens einem intelligenten Armband (200) des Satzes von mindestens einem intelligenten Armband (200), mindestens einem intelligenten Bildschirm (100) des Satzes von mindestens einem intelligenten Bildschirm (100) und/oder mindestens einem Edelstein oder synthetischen Stein und/oder Schmuckstück (300) des Satzes von mindestens einem Edelstein oder synthetischen Stein und/oder Schmuckstück (300); und,
- Durchführen einer Verteilung (530) der zu verarbeitenden Daten (201) und/oder der verarbeiteten Daten (101) auf den Satz von mindestens einem intelligenten Armband (200), den Satz von mindestens einem intelligenten Bildschirm (100) und/oder den Satz von mindestens einem Edelstein oder synthetischen Stein und/oder Schmuckstück (300).

## Claims

1. Watch (400) or piece of jewellery (300), in particular a watch or piece of jewellery in kit form, comprising a smart bracelet (200) and at least one smart screen (100) comprised, if applicable, in a precious or synthetic stone, and configured to be moved and arranged at a given location along the smart bracelet (200), the smart bracelet (200) comprising:
- a bracelet (202);
- a processing unit (210) configured to process data (201) and to supply processed data (101);
- a transmitter (220) configured to transmit, via a second communication interface (205) and at least one transmission medium or guide (230), the processed data (101) to a first communication interface (105) comprising a receiver (120) of said smart screen (100), this receiver (120) being configured to receive the processed data (101), the transmission medium (230) being arranged to ensure continuous transmission of the processed data (101) by electromagnetic or acoustic waves or by electrical signals to the receiver (120) of the smart screen (100) arranged at a given point along the bracelet (202);
the smart screen (100) comprising:
- a display (110) configured to run and/or slide along said smart bracelet (200);
- a control unit (130) configured to control the display (110) according to the processed data (101).

2. Watch (400) or piece of jewellery (300) according to claim 1, wherein said at least one second communication interface (205) is configured to be in contact with at least said first communication interface (105).

3. Watch (400) or piece of jewellery (300) according to any one of the preceding claims, wherein said at least one transmission medium (230) comprises at least one electromagnetic waveguide (230), at least one acoustic waveguide (230), at least one electrical conductor (230) and/or at least one optical fibre (230).

4. Watch (400) or piece of jewellery (300) according to any one of the preceding claims, wherein said at least one transmitter (220) comprises at least one radiofrequency transmitter (220), at least one ultrasound transmitter (220), at least one inductive transmitter (220), at least one electrical transmitter (220) and/or at least one optical transmitter (220).

5. Watch (400) or piece of jewellery (300) according to any one of the preceding claims, wherein said at least one receiver (120) comprises at least one radiofrequency receiver (120), at least one ultrasound receiver (120), at least one inductive receiver (120), at least one electrical receiver (120) and/or at least one optical receiver (120).

6. Communication method (500) for a watch (400) and/or piece of jewellery (300) according to one of claims 1 to 5 comprising at least:
- obtaining a watch (400) or a piece of jewellery (300) according to one of claims 1 to 5;
- providing an indication (510) of the number of said at least one smart bracelet (200) of said set of at least one smart bracelet (200), the number of said at least one smart screen (100) of said set of at least one smart screen (100), and/or the number of said at least one precious or synthetic stone and/or piece of jewellery (300) of said set of at least one precious or synthetic stone and/or piece of jewellery (300); and,
- distributing (530) said data (201) to be processed and/or said processed data (101) between said set of at least one smart bracelet (200), said set of at least one smart screen (100) and/or said set of at least one precious or synthetic stone and/or piece of jewellery (300).
